(19) Europäisches Patentamt
European Patent Office
Office européen des brevets

(11) **EP 3 271 789 B1**

## (12) FASCICULE DE BREVET EUROPEEN

(45) Date de publication et mention de la délivrance du brevet:
**02.09.2020 Bulletin 2020/36**

(51) Int Cl.:
***G05D 1/06*** *(2006.01)*   ***G08G 5/00*** *(2006.01)*
***G08G 5/02*** *(2006.01)*

(21) Numéro de dépôt: **16710200.3**

(22) Date de dépôt: **16.03.2016**

(86) Numéro de dépôt international:
**PCT/EP2016/055736**

(87) Numéro de publication internationale:
**WO 2016/146713 (22.09.2016 Gazette 2016/38)**

(54) **PROCÉDÉ D'ASSISTANCE AUTOMATIQUE À L'ATTERRISSAGE D'UN AÉRONEF**

AUTOMATISCHES HILFSVERFAHREN ZUR LANDUNG EINES LUFTFAHRZEUGS

AUTOMATIC ASSISTANCE METHOD FOR LANDING AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2015 FR 1500515**

(43) Date de publication de la demande:
**24.01.2018 Bulletin 2018/04**

(73) Titulaire: **Safran Electronics & Defense 92100 Boulogne-Billancourt (FR)**

(72) Inventeurs:
- **CHIODINI, Alain**
  **92100 Boulogne-Billancourt (FR)**
- **POUILLARD, Sylvain**
  **92100 Boulogne-Billancourt (FR)**

(74) Mandataire: **Regimbeau**
  **20, rue de Chazelles**
  **75847 Paris Cedex 17 (FR)**

(56) Documents cités:
**FR-A1- 2 832 796    FR-A1- 2 894 347
FR-A1- 3 009 117**

**Description**

DOMAINE TECHNIQUE GENERAL

L'invention concerne le domaine du guidage d'aéronef.

Elle a plus particulièrement pour objet un procédé de guidage automatique d'un aéronef tel qu'un drone d'une position éloignée d'un aéroport jusqu'à l'atterrissage de l'aéronef sur une piste de l'aéroport.

ETAT DE LA TECHNIQUE

Les systèmes de guidage des drones existants permettent de réaliser un guidage autonome d'un drone le long d'une trajectoire prédéfinie, correspondant par exemple au trajet d'une mission d'observation. Pour réaliser un tel guidage, la position de l'aéronef est déterminée à intervalle régulier et comparée à la trajectoire à suivre. Cette position est généralement déterminée à l'aide d'un récepteur d'un système de positionnement absolu par satellite, tel que les systèmes GPS ou Galileo. Un procédé de guidage d'un aéronef est également décrit dans FR 2 894 347 A1.

Il peut néanmoins arriver que le calculateur de l'aéronef soit incapable de déterminer la position courante de l'aéronef, soit du fait d'une panne d'un composant de l'aéronef, tel qu'un récepteur GPS, soit du fait d'une indisponibilité du signal du système de positionnement, par exemple en cas de brouillage de celui-ci. Sans connaitre la position de l'aéronef, le calculateur de celui-ci est alors incapable de guider l'aéronef pour lui faire suivre la trajectoire prédéterminée. Le système de guidage de l'aéronef est alors notamment incapable de faire parvenir celui-ci à son point d'atterrissage prévu tel qu'une piste d'un aéroport. L'aéronef risque alors de s'écraser à une position inconnue et d'être perdu.

Pour éviter cela, la position courante de l'aéronef peut être déterminée à l'aide d'un autre système embarqué par celui-ci. Par exemple le calculateur de l'aéronef peut déterminer cette position à partir des signaux fournis par la centrale inertielle de l'aéronef mesurant en permanence les accélérations linéaires et angulaires de l'aéronef. Une intégration des signaux fournis par cette centrale inertielle permet de déterminer les déplacements de l'aéronef et donc de déterminer sa position relative par rapport à la dernière position fournie par le système de positionnement par satellite.

Néanmoins, la détermination de la position de l'aéronef par une telle méthode basée sur l'intégration des signaux de la centrale inertielle peut présenter une incertitude élevée. Le cumul au cours du temps des écarts entre le mouvement déterminé par intégration et le mouvement réel de l'aéronef engendre une dérive de la position de l'aéronef déterminée par rapport à sa position réelle. Une telle dérive peut atteindre plusieurs kilomètres par heure de vol depuis la dernière position fournie par le système de positionnement satellite. Dans le cas d'une panne de positionnement satellite ayant lieu à une longue distance du point prévu d'atterrissage et entrainant un guidage de l'aéronef à partir des signaux de la centrale inertielle sur une longue durée, le système de guidage peut, du fait de cette dérive, conduire sans le savoir l'aéronef à une position éloignée de plusieurs kilomètres du point d'atterrissage. L'aéronef sera alors dans l'impossibilité de connaitre sa position réelle, de trouver l'aéroport prévu pour l'atterrissage et de se poser.

Il existe donc un besoin d'un procédé de guidage permettant de guider de façon sûre un aéronef, de manière autonome, depuis un point de retour éloigné jusqu'à un aéroport et de faire atterrir l'aéronef sur une piste de celui-ci, malgré une indisponibilité du positionnement par satellite et malgré une dérive prononcée de la position courante de l'aéronef déterminée à partir des signaux de sa centrale inertielle.

PRESENTATION DE L'INVENTION

La présente invention se rapporte selon un premier aspect à un procédé d'assistance automatique à l'atterrissage d'un aéronef selon la revendication 1.

Le mouvement tournant mis en oeuvre entre le point de capture et le point d'accroché permet de diminuer l'incertitude sur la position de l'aéronef liée aux incertitudes et biais de mesure de l'écartomètre. L'aéronef peut ainsi être guidé jusqu'au point d'accroché avec une précision accrue garantissant le bon alignement de l'aéronef avec la piste d'atterrissage.

La première étape de guidage de la phase d'assistance à la navigation retour peut comprendre le guidage de l'aéronef le long de la trajectoire prédéfinie du point de retour jusqu'au point de capture à partir de données d'attitude fournies par la centrale inertielle, de données d'altitude fournies par l'altimètre et de données de position corrigées calculées à l'aide des données de position de l'aéronef fournies par la centrale inertielle et de mesures d'azimut transmises par l'écartomètre.

Les mesures de l'écartomètre peuvent ainsi être employées pour compenser la dérive de la centrale inertielle dès le point de retour, minimisant l'incertitude sur la position de l'aéronef lors du guidage de celui-ci vers le point de capture.

Dans une première variante de mise en oeuvre, la trajectoire prédéfinie entre le point de retour et le point de capture est rectiligne.

Une trajectoire rectiligne permet de minimiser la distance à parcourir entre le point de retour et le point de capture, minimisant le temps de retour et la consommation de ressources sur cette portion de la trajectoire de retour.

Dans une deuxième variante de mise en œuvre, la trajectoire prédéfinie entre le point de retour et le point de capture est en zigzag.

Une trajectoire en zigzag permet de faire davantage varier la plage de variation angulaire mesurée par l'écartomètre et donc de diminuer l'incertitude associée et l'incertitude sur la position de l'aéronef.

Le dispositif de traitement de données étant configuré pour être relié en outre à une caméra embarquée dans l'aéronef, la phase d'assistance à l'atterrissage peut comprendre l'estimation d'une position du point d'aboutissement dans une image de la piste d'atterrissage capturée par la caméra et l'estimation d'une position de l'aéronef en fonction de ladite position du point d'aboutissement estimée dans l'image et de données d'altitude fournies par l'altimètre.

La position de l'aéronef peut ainsi être déterminée tout au long de l'atterrissage avec une incertitude plus faible que si elle était déterminée par la centrale inertielle et ou l'écartomètre. Cette précision accrue permet de guider de manière sûre l'aéronef entre le point d'accroché et le point d'aboutissement et de le faire atterrir.

Le dispositif de traitement de données étant en outre configuré pour être relié à un émetteur-récepteur embarqué sur ledit aéronef et destiné à recevoir des signaux émis par au moins trois émetteurs-récepteurs positionnés au sol, la phase d'assistance à l'atterrissage peut comprendre l'estimation de données de position corrigées de l'aéronef à partir de données de position fournies par la centrale inertielle, de mesures d'azimut transmises par l'écartomètre, de données de distances entre l'émetteur-récepteur embarqué et lesdits au moins trois émetteurs-récepteurs au sol.

L'utilisation d'informations de distance entre l'aéronef et des points fixes au sol de position connue comme les émetteurs-récepteurs au sol permet de diminuer l'incertitude de la position de l'aéronef déterminée à partir de la centrale inertielle et de l'écartomètre de façon à guider précisément l'aéronef jusqu'au point d'aboutissement.

Selon un deuxième aspect, l'invention concerne un produit programme d'ordinateur comprenant des instructions de code pour l'exécution du procédé selon le premier aspect lorsque ce programme est exécuté par un processeur.

Selon un troisième aspect, l'invention concerne un dispositif de traitement de données configuré pour la mise en oeuvre du procédé d'assistance selon le premier aspect.

Selon un quatrième aspect, l'invention concerne un système d'assistance automatique à l'atterrissage d'un aéronef sur une piste d'atterrissage comprenant :

- une centrale inertielle configurée pour estimer la position et l'attitude de l'aéronef,

- un altimètre configuré pour mesurer l'altitude de l'aéronef,

- un écartomètre configuré pour mesurer par rapport à un point de référence l'azimut de l'aéronef par rapport à une direction de référence,

- le dispositif de traitement de données selon le troisième aspect.

Ledit système d'assistance selon le quatrième aspect peut comprendre en outre une caméra configurée pour être relié au dispositif de traitement de données.

Ledit système d'assistance selon le quatrième aspect peut comprendre en outre :

- au moins trois émetteurs-récepteurs positionnés au sol ;

- un émetteur-récepteur destiné à recevoir des signaux émis par lesdits au moins trois émetteurs-récepteurs positionnés au sol, embarqué sur ledit aéronef et configuré pour être relié au dispositif de traitement de données.

De tels produits programmes d'ordinateur, dispositifs de traitement de données et systèmes présentent les mêmes avantages que ceux évoqués pour le procédé selon le premier aspect.

PRESENTATION DES FIGURES

D'autres caractéristiques et avantages apparaîtront à la lecture de la description qui va suivre d'un mode de réalisation. Cette description sera donnée en référence aux dessins annexés dans lesquels :

- la figure 1 illustre schématiquement un exemple de guidage à l'atterrissage d'un aéronef sur une piste d'atterrissage depuis un point de retour A jusqu'à un point d'aboutissement PA selon un mode de mise en œuvre de l'invention;

- la figure 2 illustre un système d'assistance à l'atterrissage d'un aéronef selon un mode de réalisation de l'invention ;

- la figure 3 illustre les deux liaisons radioélectriques reliant le dispositif de traitement de données à une station au sol ainsi que l'écartomètre compris dans le système d'assistance à l'atterrissage selon l'invention;

- la figure 4 illustre un système d'assistance à l'atterrissage d'un aéronef selon un mode de réalisation de l'invention ;

- la figure 5 est un diagramme schématisant un exemple de mise en oeuvre du procédé d'assistance automatique à l'atterrissage d'un aéronef selon l'invention;

- la figure 6 est un diagramme illustrant le calcul de données de position corrigées à partir de mesures transmises par l'écartomètre selon un mode de mise en oeuvre de l'invention;

- la figure 7 est un diagramme schématisant l'écart entre la position de l'aéronef et le point d'accroché à l'issue du mouvement tournant de l'aéronef en fonction du rayon de courbure;

- la figure 8 illustre la phase d'assistance à l'atterrissage selon l'invention lorsque le système d'assistance est équipé d'une caméra ;

- la figure 9 illustre le positionnement d'un réticule dans une image sur le point d'aboutissement ;

- la figure 10 est un diagramme illustrant le calcul de données de position corrigées à partir de mesures transmises par l'écartomètre selon un mode de mise en oeuvre de l'invention.

DESCRIPTION DETAILLEE

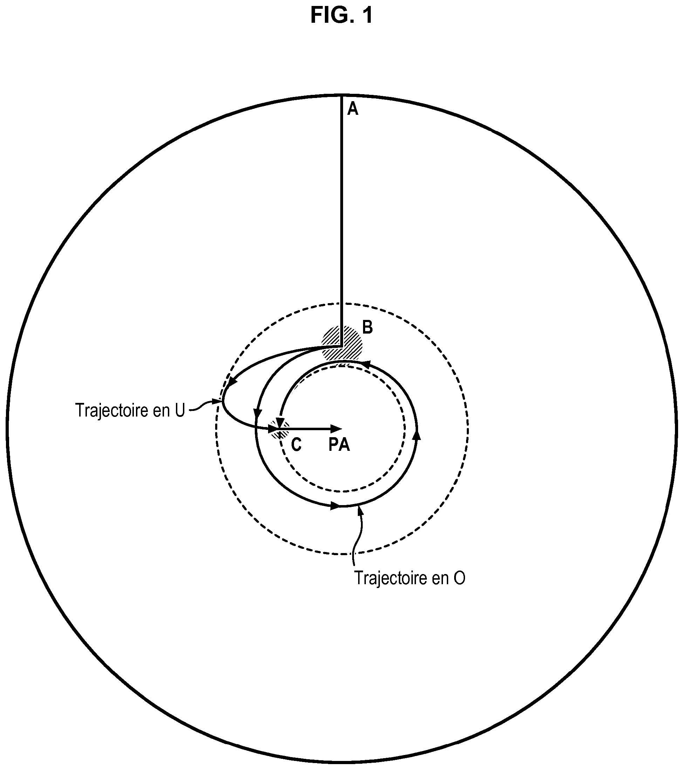

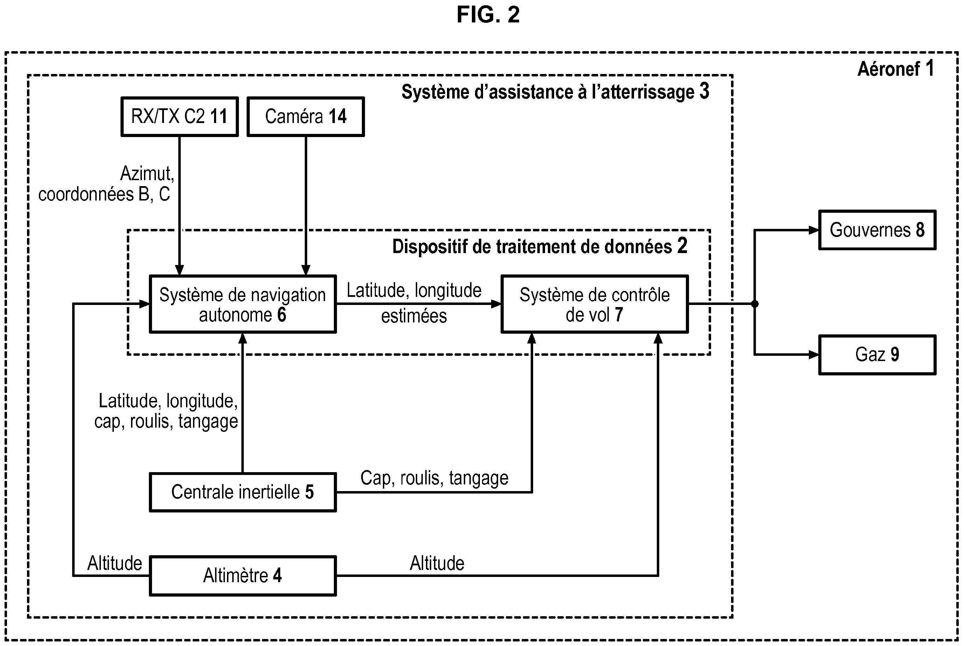

Un mode de réalisation de l'invention concerne un procédé d'assistance automatique à l'atterrissage d'un aéronef 1 sur une piste d'atterrissage depuis un point de retour A jusqu'à un point d'aboutissement PA au niveau duquel l'aéronef entre en contact avec la piste d'atterrissage, comme représenté **en figure 1.** Ce procédé est mis en oeuvre par un dispositif de traitement de données 2 d'un système d'assistance à l'atterrissage 3, comme représenté en **figure 2.** Le système d'assistance à l'atterrissage 3 peut également comprendre un altimètre 4 et une centrale inertielle 5 embarqués à bord de l'aéronef et auxquels le dispositif de traitement de données peut être relié.

L'altimètre 4 peut être un altimètre barométrique ou un altimètre laser. L'altimètre barométrique peut avoir une précision à 10 mètres et peut être recalé grâce à la valeur de la pression atmosphérique QNH qui est la pression barométrique corrigée des erreurs instrumentales, de température et de gravité et ramenée au niveau moyen de la mer (MSL ou Mean Sea Level). En pratique, la pression QNH peut être donnée en référence au seuil de la piste d'atterrissage, de sorte que l'altimètre affiche l'altitude géographique du point d'aboutissement PA lorsque l'aéronef se trouve sur le seuil de piste en question. L'altimètre laser peut avoir une précision à 0.2 mètres et être utilisé lorsque l'altitude est inférieure à 100 mètres.

La centrale inertielle 5 est capable d'intégrer les mouvements de l'aéronef (accélération et vitesse angulaire) pour estimer son orientation (angles de roulis, de tangage et de cap), sa vitesse linéaire et sa position. Elle comprend des accéléromètres pour mesurer les accélérations linéaires de l'aéronef dans trois directions orthogonales et des gyromètres pour mesurer les trois composantes du vecteur vitesse angulaire (vitesses de roulis, de tangage et de lacet). La centrale inertielle fournit également l'attitude de l'aéronef (angles de roulis, tangage et cap).

Ce procédé propose de guider de façon sûre un aéronef tel qu'un drone ou un avion de ligne, de manière autonome, depuis un point de retour éloigné jusqu'à la piste d'atterrissage, par exemple celle d'un aéroport, et de faire atterrir l'aéronef sur cette piste, malgré une indisponibilité du positionnement par satellite et malgré une dérive prononcée de la position courante de l'aéronef déterminée par sa centrale inertielle 5, en corrigeant les données de position fournies par cette centrale à l'aide de données de positions complémentaires fournies par un système au sol.

Pour cela, le dispositif de traitement de données 2 est susceptible d'être embarqué à bord de l'appareil et peut comprendre un calculateur et une interface de communication. Un tel calculateur embarqué peut consister en un processeur ou microprocesseur, de type x-86 ou RISC par exemple, un contrôleur ou microcontrôleur, un DSP, un circuit intégré tel qu'un ASIC ou programmable tel qu'un FPGA, une combinaison de tels éléments ou toute autre combinaison de composants permettant de mettre en oeuvre les étapes de calcul du procédé décrit ci-dessous. Une telle interface de communication peut être n'importe quelle interface, analogique ou numérique, permettant au calculateur d'échanger des informations avec les autres éléments du système d'assistance 3 tels que l'altimètre 4 et la centrale inertielle 5. Une telle interface peut par exemple être une interface série RS232, une interface USB, Firewire, HDMI ou une interface réseau de type Ethernet.

Comme représenté en figure 2, le calculateur du dispositif de traitement de données 2 peut être partagé entre un système de navigation autonome 6 et un système de contrôle de vol (SCV) 7. Le système de navigation autonome 6 peut être chargé d'estimer la latitude et la longitude de la position de l'aéronef ainsi que l'altitude lors de l'atterrissage. Le système de contrôle de vol 7 peut être chargé de procéder au guidage de l'aéronef en fonction des données de latitude et longitude fournies par le système de navigation autonome 6, de l'altitude fournie par l'altimètre 4 et des données d'attitude de l'aéronef, telles que le cap, le roulis et le tangage, fournies par la centrale inertielle 5. Pour cela le système de contrôle de vol peut transmettre des consignes aux organes de pilotage de l'aéronef tels que les actionneurs électriques, hydrauliques ou hybrides actionnant les gouvernes 8 ou la manette des gaz 9.

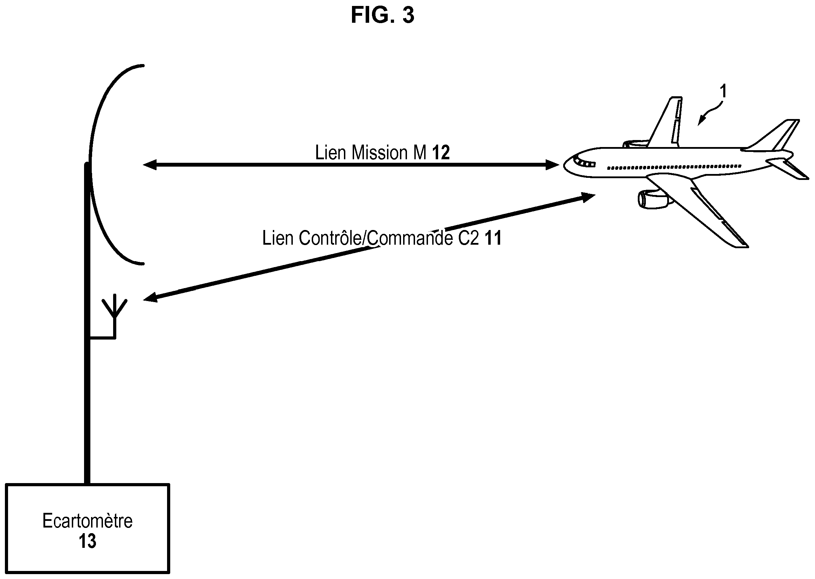

Le dispositif de traitement de données 2 peut être relié à une station au sol, généralement placée à proximité de l'aéroport ou de la piste d'atterrissage, via deux liaisons comme représenté en **Figure 3** :

- une liaison 11 dite « contrôle/commande » C2 radioélectrique et bidirectionnelle dans une bande du spectre électromagnétique comprise entre 3 et 6 GHz qui permet l'échange de messages de contrôle et de commande entre la station sol et l'aéronef. Les signaux transmis sont modulés à l'aide d'une modulation mono-porteuse et sont émis/reçus au moyen d'une antenne omnidirectionnelle montée sur une tête de mât au niveau de la station au sol ;

- une liaison de données mission 12 M radioélectrique et bidirectionnelle dans une bande comprise entre 10 et 15 GHz du spectre électromagnétique qui permet l'échange des flux de données générées par les différents capteurs embarqués. Les signaux transmis sont modulés à l'aide d'une modulation multi-porteuses et sont émis/reçus au moyen d'une antenne directionnelle telle qu'une parabole, montée en tête de mât.

Le système d'assistance à l'atterrissage 3 comprend également un écartomètre 13. Un tel écartomètre est un système au sol, relié à l'antenne directionnelle de la station au sol utilisée pour la liaison de données mission 12. L'écartomètre est configuré pour mesurer de manière continue la direction dans laquelle se trouve l'aéronef, c'est à dire l'azimut de l'aéronef par rapport à une direction de référence, par exemple le nord. L'azimut de l'aéronef est mesuré par rapport à un point de référence, par exemple par rapport à la position de l'antenne directionnelle montée en tête de mat. L'écartomètre peut mesurer cet angle à partir de l'orientation de l'antenne directionnelle fournie par un dispositif électromécanique positionneur d'antenne configuré pour positionner en gisement et en site l'antenne directionnelle de façon à la faire pointer vers l'aéronef pour maximiser la qualité de la liaison radioélectrique. L'écartomètre est configuré pour transmettre les données d'azimut mesurées au dispositif de traitement de données par l'intermédiaire de la liaison de contrôle/commande 11.

Le procédé propose d'utiliser ces données d'azimut transmises par l'écartomètre et les données de position de l'aéronef fournies par la centrale inertielle pour calculer des données de position corrigées compensant la dérive de la centrale inertielle. Ces données de position corrigées peuvent être employées pour guider l'aéronef jusqu'à un point d'accroché C prédéterminé approximativement aligné avec l'axe de la piste d'atterrissage et situé en périphérie d'une zone d'accroche centrée sur le point d'aboutissement PA et de rayon prédéterminé, comme représenté en Figure 1. A titre d'exemple, une telle zone d'accroché peut présenter un rayon inférieur ou égal à 5 km.

Le système d'assistance à l'atterrissage 3 peut également comprendre un système de positionnement supplémentaire dédié au guidage de l'aéronef dans la zone d'accroché lors d'une phase d'atterrissage jusqu'au point d'aboutissement.

Dans un premier mode de réalisation représenté en figure 2, le système d'assistance à l'atterrissage 3 comprend une caméra 14 embarquée à bord de l'aéronef à laquelle le dispositif de traitement de données peut être relié. Une telle caméra peut être une caméra panoramique infrarouge par exemple de type SWIR (« ShortWave Infrared Range », de longueur d'onde entre 0.9 et 1.7 microns). Le flux vidéo acquis par la caméra est transmis d'une part au dispositif de traitement 2 de façon à repérer la piste d'atterrissage et à déterminer la position de l'aéronef par rapport à celle-ci lors de l'atterrissage, et d'autre part à la station au sol au moyen de la liaison de données mission.

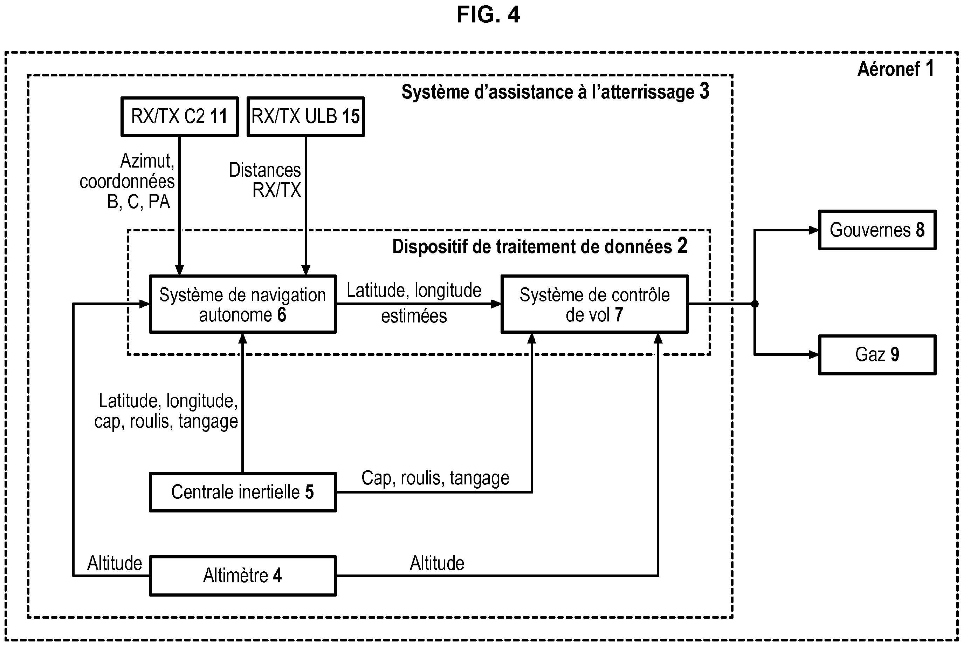

Dans un deuxième mode de réalisation représenté en **figure 4,** le système d'assistance à l'atterrissage 3 comprend au moins trois émetteurs-récepteurs positionnés au sol et un émetteur-récepteur embarqué 15 sur l'aéronef et configuré pour être relié au dispositif de traitement de données 2. De tels émetteurs-récepteurs peuvent être des balises radioélectriques ULB (Ultra large bande). En échangeant des signaux avec les émetteurs-récepteurs au sol, l'émetteur-récepteur embarqué est capable de déterminer la distance le séparant de chacun des émetteurs-récepteurs au sol, par exemple par une mesure du temps de transmission aller-retour d'un signal. L'émetteur-récepteur embarqué est également configuré pour transmettre ces distances au dispositif de traitement 2. Connaissant les positions des émetteurs-récepteurs au sol, le dispositif de traitement 2 peut alors déterminer une position de l'aéronef corrigée à partir des données d'azimut transmises par l'écartomètre, les données de position de l'aéronef fournies par la centrale inertielle et les données de distance fournies par l'émetteur-récepteur embarqué.

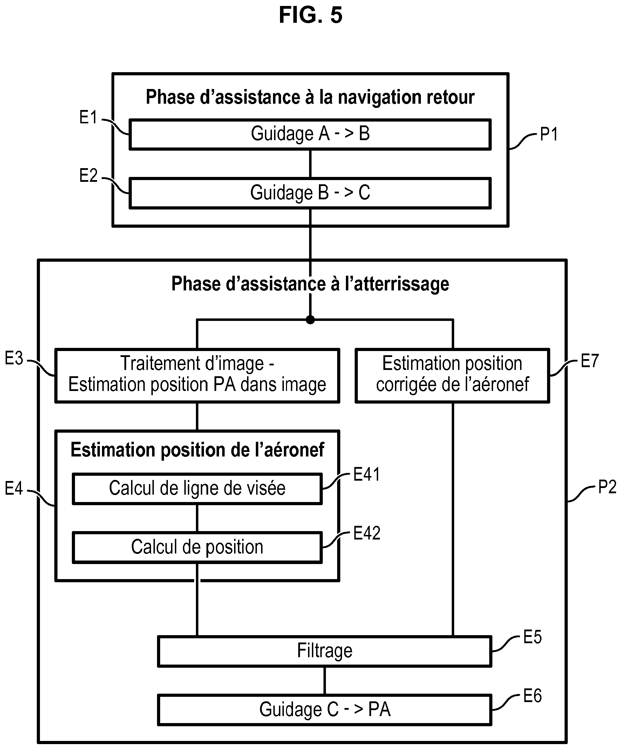

Les étapes du procédé sont décrites plus en détail dans les paragraphes suivants, en référence à la **figure 5.**

Le procédé peut comprendre une phase d'assistance à la navigation retour P1 au cours de laquelle le dispositif de traitement réalise le guidage, à partir de données de position et d'attitude fournies par la centrale inertielle 5 et de données d'altitude fournies par l'altimètre 4, de l'aéronef le long d'une trajectoire prédéfinie du point de retour A jusqu'au point d'accroché C prédéterminé approximativement aligné avec l'axe de la piste d'atterrissage. Afin de compenser la dérive des données de position fournies par la centrale inertielle, le guidage peut être réalisé sur au moins une partie de ladite trajectoire prédéfinie à partir de données de position corrigées calculées à l'aide de données de position de l'aéronef fournies par la centrale inertielle et de mesures transmises par l'écartomètre. Selon une variante, les données de position corrigées peuvent également être calculées en fonction de données d'altitude fournies par l'altimètre.

Le procédé peut également comprendre une phase d'assistance à l'atterrissage P2 au cours de laquelle le dispositif de traitement réalise le guidage de l'aéronef du point d'accroche C au point d'aboutissement PA.

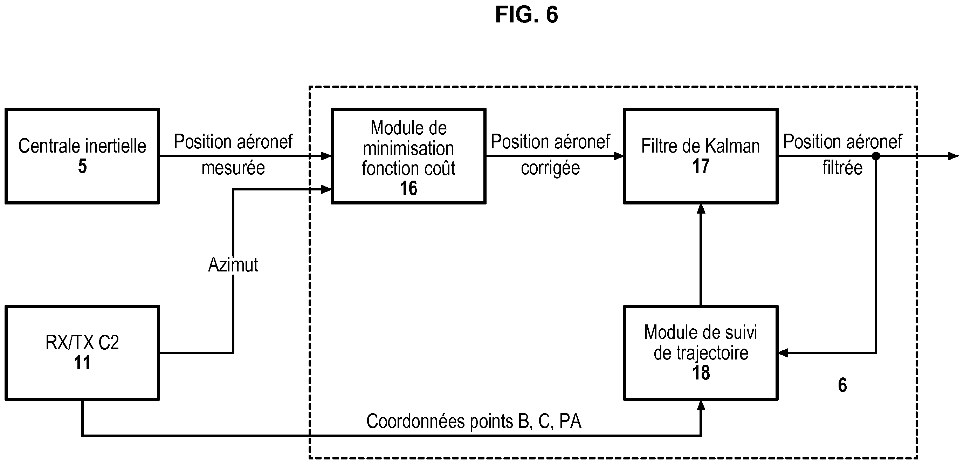

Le calcul des données de position corrigées faisant intervenir les mesures transmises par l'écartomètre peut être réalisé par un module de minimisation 16 minimisant une fonction de coût comme représenté en **figure 6.** Une telle fonction de coût peut être une expression mathématique comprenant des termes de puissance d'écart entre les coordonnées de position réelles de l'aéronef et les coordonnées correspondantes fournies par la centrale inertielle ou par l'écartomètre. Ces puissances peuvent être choisies arbitrairement ou sélectionnées de manière à moduler ou accentuer l'importance relative des contributions les unes par rapport aux autres. Les coordonnées de position corrigées recherchées sont alors les coordonnées choisies comme coordonnées de position réelles minimisant la fonction de coût selon le critère des moindres « puissances ». Un exemple de fonction de coût simple C ne prenant pas en compte les mesures d'altitude fournies par l'altimètre, est fourni ci-dessous. Cette fonction de coût comprend par exemple un terme C1 fonction des données de position déterminées par la centrale inertielle et un terme C2 fonction de la mesure d'azimut fournie par l'écartomètre.

$$C\big(x(t),y(t)\big) = \underbrace{C_1\big(x(t),y(t)\big)}_{centrale\ inertielle} + \underbrace{C_2\big(x(t),y(t)\big)}_{\acute{e}cartom\grave{e}tre}$$

La détermination de la position de l'aéronef étant réalisée de manière discrète, on suppose dans cet exemple qu'elle est réalisée de manière périodique avec une période T d'échantillonnage. On se place à l'instant t = kT.

$$C_1\big(x(kT),y(kT)\big) = \sum_{m=0}^{k}\left(\frac{\sqrt{\big(x(mT)-x_I(mT)\big)^2 + \big(y(mT)-y_I(mT)\big)^2}}{\delta_{maxi}^{CI}(mT)}\right)^p$$

$$C_2\big(x(kT),y(kT)\big) = \sum_{m=0}^{k}\left(\frac{\big(\theta(mT)-\theta_e(mT)\big)^2}{\sigma_e^2}\right)^q$$

Où :

(x(mT),y(mT)) : Position retenue de l'aéronef à l'instant mT.
(x$_I$mT),y$_I$mT)) : Position donnée par la centrale inertielle à l'instant mT.
$\delta_{maxi}^{CI}(mT)$  : Dérive maximale de la centrale inertielle à l'instant mT.
p, q : Paramètres optionnels permettant de conformer progressivement la fonction coût à un « puits rectangulaire » (lorsque p, q → ∞).
θ(mT) : Azimut retenu de l'aéronef par rapport à la direction de référence à l'instant mT.
θ$_e$(mT) : Azimut mesuré de l'aéronef par rapport à la direction de référence à l'instant mT.
σ$_e$ : Écart type de l'erreur de mesure commise par l'écartomètre

L'angle θ(t) est lié aux coordonnées (x(t),y(t)) de la manière suivante :

$$\theta(t) = \arg\big(x(t)+iy(t)\big) = \mathrm{Re}\big(-i\log\big(x(t)+iy(t)\big)\big)$$

où Re désigne la partie réelle.

Les puissances p, q peuvent être modulées afin de faire varier le poids de chaque terme dans la fonction C en fonction de l'étape de guidage en cours, par exemple de façon à diminuer l'importance de la centrale inertielle une fois le point de capture B passé.

Les termes C1 et C2 donnés en exemple sont fonction des données de position et des mesures d'azimut fournies à plusieurs instants mT avant l'instant kT auquel les données de position corrigées x(t), y(t) sont recherchées. Les coordonnées de position (x(mT),y(mT)),(x$_l$(mT),y$_l$(mT)) et les mesures d'azimut $\theta$(mT), $\theta_e$(mT) ayant déjà été déterminées ou mesurées pour les instants antérieurs à t=kT, ces termes sont supposés connus pour m<k.

Minimiser C(x(t),y(t)) revient alors à minimiser :

$$\Gamma(k) = \left( \frac{\sqrt{\left(x(k) - x_l(k)\right)^2 + \left(y(k) - y_l(k)\right)^2}}{\delta_{maxi}^{CI}(k)} \right)^p + \left( \frac{\left(\mathrm{Re}\left(-i \log\left(x(k) + iy(k)\right)\right) - \theta_e(k)\right)^2}{\sigma_e^2} \right)^q$$

La solution est obtenue en résolvant le système d'équation suivant :

$$\begin{cases} \dfrac{\partial \Gamma}{\partial x} = f_x = 0 \\ \dfrac{\partial \Gamma}{\partial y} = f_y = 0 \end{cases}$$

Ce système peut être résolu par toute méthode connue de l'Homme du Métier, par exemple par la méthode itérative de Newton-Raphson. Nous formons pour cela le vecteur F et la matrice Jacobienne J suivants :

$$F_n = \begin{pmatrix} f_x \\ f_y \end{pmatrix}$$

$$J_n = \begin{pmatrix} \dfrac{\partial f_x}{\partial x} & \dfrac{\partial f_x}{\partial y} \\ \dfrac{\partial f_y}{\partial x} & \dfrac{\partial f_y}{\partial y} \end{pmatrix}$$

Où n désigne l'indice de l'itération courante.

La solution est déterminée itérativement comme suit :

$$\mathrm{position}_n = \mathrm{position}_{n-1} - J_{n-1}^{-1} F_{n-1}$$

La position initiale permettant d'amorcer l'équation ci-dessus est donnée par le filtre à l'issue de la précédente itération de filtrage.

Si la matrice J est mal conditionnée il est possible de procéder à une régularisation de Tikhonov.

Les données de position corrigées (x(t), y(t)) obtenues par minimisation de la fonction de coût peuvent être filtrées à l'aide d'un filtre de Kalman 17 afin d'affiner l'estimation de la position de l'aéronef avant d'utiliser cette position pour réaliser le guidage de l'aéronef. Afin d'améliorer l'efficacité de ce filtrage, le dispositif de traitement peut comprendre un module de suivi de trajectoire 18 destiné à adapter la matrice d'état du filtre pour prendre en compte le profil de la trajectoire prédéfinie à faire suivre à l'aéronef. Pour cela, le module de suivi de trajectoire peut obtenir cette trajectoire prédéfinie auprès de la station au sol par l'intermédiaire de la liaison de contrôle/commande 11.

Une telle compensation de la dérive de la centrale inertielle de l'aéronef à l'aide des mesures fournies par l'écartomètre permet au système d'assistance d'améliorer sa connaissance de la position de l'aéronef malgré l'indisponibilité du positionnement par satellite et malgré la dérive de la centrale inertielle. Malgré cela, les données de position corrigées déterminées restent tributaires des incertitudes et des biais de mesure de l'écartomètre. De tels biais et incertitude sur l'azimut mesuré peuvent s'élever à un demi-degré, ce qui peut représenter une erreur importante sur la position de l'aéronef lorsque celui-ci se trouve à une grande distance du point d'aboutissement PA.

Afin de minimiser l'erreur sur la position de l'aéronef due aux biais et incertitude de mesure de l'écartomètre, la phase d'assistance à la navigation P1 peut comprendre une première étape de guidage E1 de l'aéronef le long de la trajectoire prédéfinie du point de retour A jusqu'à un point de capture B prédéterminé. La phase d'assistance à la navigation P1 peut également comprendre une deuxième étape de guidage E2 de l'aéronef le long de la trajectoire prédéfinie du point de capture B au point d'accroche C ladite trajectoire prédéfinie imposant à l'aéronef entre le point de capture B et le point d'accroche C un mouvement tournant. Le mouvement tournant peut notamment être réalisé autour du point de référence par rapport auquel sont prises les mesures de l'écartomètre. Au cours de cette deuxième étape de guidage E2 le guidage de l'aéronef peut être réalisé à partir de données d'attitude fournies par la centrale inertielle, de données d'altitude fournies par l'altimètre et de données de position corrigées calculées à l'aide de données de position de l'aéronef fournies par la centrale inertielle et de mesures d'azimut transmises par l'écartomètre.

La mise en oeuvre d'un tel mouvement tournant permet de faire varier la position de l'antenne directionnelle de la station au sol et donc de modifier les mesures d'angle fournies par l'écartomètre. Ceci permet de diminuer l'erreur sur la position de l'aéronef estimée à partir des données de position de la centrale inertielle et des mesures de l'écartomètre. A titre d'exemple, la trajectoire prédéterminée est choisie de sorte que le balayage angulaire de l'aéronef par rapport à la station au sol soit supérieur à 90°. Un tel mouvement tournant est mis en oeuvre au sein d'une zone de capture, représentée en figure 1 sous forme d'une couronne centrée sur le point d'aboutissement PA et entourant la zone d'accroché. A titre d'exemple, le rayon maximal de la zone de capture peut être inférieur ou égal à 10 km. La couronne entourant la zone d'accroche et comprenant le point de retour A est appelée zone de navigation retour et peut s'étendre jusqu'à une distance de 150 km du point d'aboutissement.

Le point de capture B à partir duquel le mouvement tournant est mis en oeuvre peut être choisi de manière à ce que la position réelle de l'aéronef soit située de manière certaine dans la zone de capture lorsque le dispositif de traitement estime que l'aéronef est positionné au point de capture B, malgré l'erreur sur la position de l'aéronef résultant de la dérive de la centrale inertielle et de l'incertitude des mesures de l'écartomètre.

A titre d'exemple, comme présenté en figure 1, la trajectoire choisie entre le point de capture B et le point d'accroche C peut être une trajectoire en U. Alternativement, ladite trajectoire peut être une trajectoire en O, ou en spirale entrainant un balayage angulaire de l'aéronef par rapport à la station au sol potentiellement supérieur à 360°. L'aéronef fait alors plus d'un tour complet autour de la station au sol avant d'atteindre le point d'accroché.

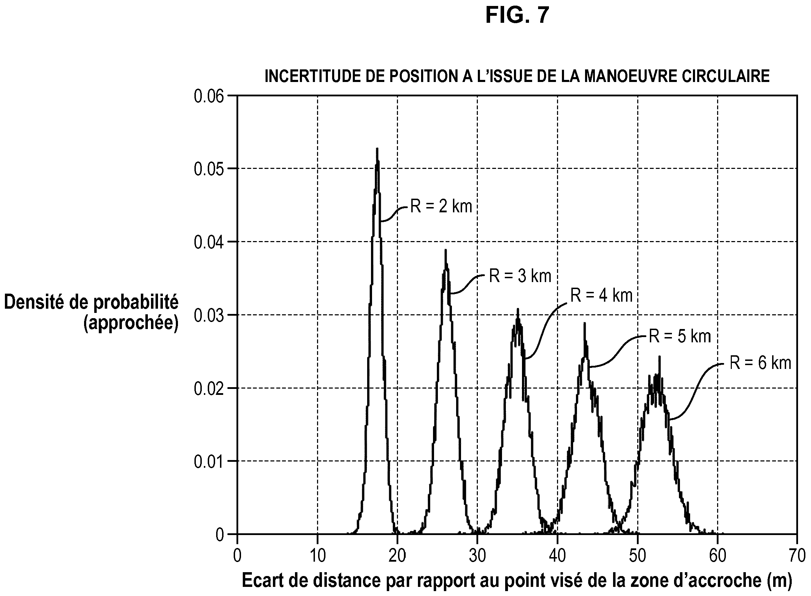

L'incertitude résiduelle sur la position de l'aéronef est d'autant plus faible que le rayon de courbure du mouvement tournant est faible comme représenté en figure 7. Le mouvement tournant peut donc être mis en oeuvre préférentiellement avec le rayon de courbure le plus faible possible, par exemple inférieur à 5 km, voir inférieur ou égal à 2 km.

Au cours de cette première étape de guidage E1 le guidage de l'aéronef peut être réalisé uniquement à partir de données de position et d'attitude fournies par la centrale inertielle et de données d'altitude fournies par l'altimètre. Les données de position de l'aéronef ne sont alors pas recalées à l'aide des mesures de l'écartomètre entre le point de retour A et le point de capture B. Alternativement au cours de cette première étape de guidage E1 le guidage de l'aéronef peut être réalisé à partir de données d'attitude fournies par la centrale inertielle, de données d'altitude fournies par l'altimètre et de données de position corrigées calculées à l'aide des données de position de l'aéronef fournies par la centrale inertielle et de mesures d'azimut transmises par l'écartomètre. Les données de position de l'aéronef sont alors recalées à l'aide des mesures de l'écartomètre du point de retour A jusqu'au point d'accroche C.

Au cours de cette première étape de guidage E1, la trajectoire prédéfinie suivie par l'aéronef entre le point de retour A et le point de capture B peut être rectiligne, minimisant ainsi la distance parcourue et l'énergie consommée pour parvenir au point de capture B.

Alternativement, lorsque la première étape de guidage E1 comprend un guidage de l'aéronef à partir de données de position corrigées, c'est-à-dire lorsque les mesures de l'écartomètre sont déjà employées entre le point de retour A et le point de capture B pour compenser la dérive de la centrale inertielle, la trajectoire prédéfinie suivie par l'aéronef entre le point de retour A et le point de capture B peut être en zigzag. Une telle trajectoire permet alors de faire varier légèrement l'orientation de la position de l'antenne directionnelle de la station au sol et donc de réduire l'incertitude sur la position de l'aéronef, avant la mise en oeuvre du mouvement tournant.

Les étapes décrites ci-dessus permettent de compenser la dérive de la centrale inertielle et d'obtenir la position de l'aéronef avec une précision typiquement de l'ordre d'une cinquantaine de mètres ou moins, suffisante pour faire parvenir l'aéronef dans l'alignement de la piste jusqu'au point d'accroche C. Néanmoins la précision obtenue peut s'avérer insuffisante pour guider l'aéronef jusqu'au point d'aboutissement et le faire atterrir sur la piste d'atterrissage. Avec une incertitude de positionnement de l'ordre de 50 m, l'aéronef risque d'être guidé à côté de la piste. Il peut donc être souhaitable d'obtenir la position de l'aéronef avec une précision accrue garantissant un atterrissage sûr.

Dans un premier mode de réalisation, l'aéronef est guidé du point d'accroche C au point d'aboutissement PA à partir de données d'attitude fournies par la centrale inertielle, de données d'altitude fournies par l'altimètre et de données de position corrigées calculées à l'aide des données de position de l'aéronef fournies par la centrale inertielle et de mesures d'azimut transmises par l'écartomètre, comme lors de la deuxième étape de guidage E2.

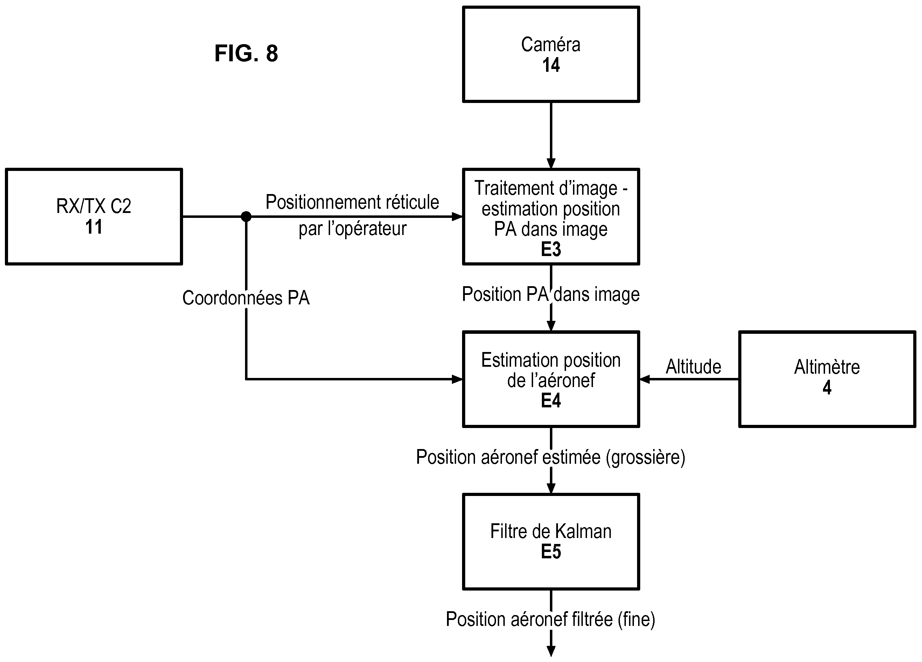

Dans un deuxième mode de réalisation, représenté en figure 5 et en **figure 8,** la phase d'assistance à l'atterrissage P2, au cours de laquelle l'aéronef est guidé du point d'accroche C au point d'aboutissement PA, peut exploiter les images de la piste d'atterrissage et du point d'aboutissement PA fournies par la caméra 14 embarquée à bord de l'aéronef. Pour cela, la phase d'assistance à l'atterrissage P2 peut comprendre une étape de traitement d'image E3 au cours de laquelle la position du point d'aboutissement PA est estimée dans une image de la piste d'atterrissage capturée par la caméra. Cette étape peut être mise en oeuvre de manière répétée tout au long de l'approche de l'aéronef vers la piste et de son atterrissage.

Cette détection du point d'aboutissement dans une image peut être entièrement automatique si le point d'aboutissement est facilement détectable dans l'image, par exemple si le point d'aboutissement est matérialisé sur la piste d'atterrissage par un repère au sol, ou bien si la piste elle-même est repérable par la présence au sol d'un ou plusieurs repères tels que des marquages ou des lumières. La position du point d'aboutissement dans l'image peut alors être déterminée par des techniques connues de reconnaissance de forme ou d'image.

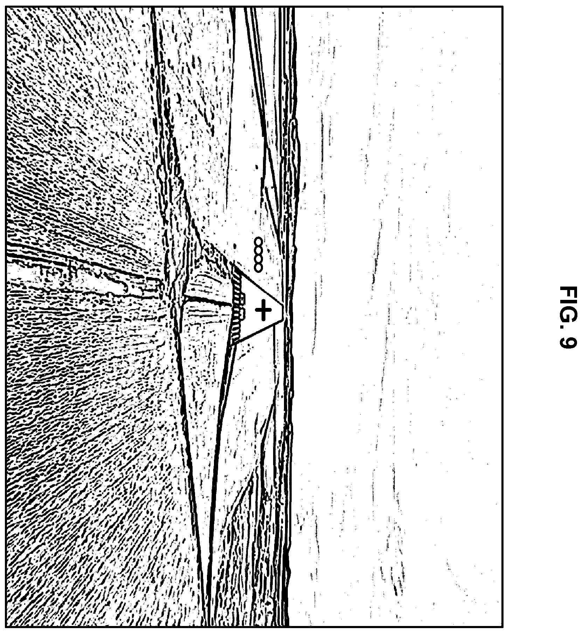

Alternativement, la position du point d'aboutissement dans une image peut être spécifiée par un opérateur humain dans une première image, par le biais de la liaison contrôle/commande 11, par exemple en positionnant dans l'image un réticule de visée sur le point d'aboutissement, comme représenté **en figure 9.** Puis, le dispositif de traitement peut assurer le pistage (« tracking ») de la position du point d'aboutissement pointée par le réticule dans les images fournies ultérieurement par la caméra embarquée, et ajuster automatiquement la position du réticule pour le maintenir centré sur le point d'aboutissement. Une telle initiation manuelle du pistage peut être nécessaire lorsque le marquage de la piste d'atterrissage ou du point d'aboutissement est insuffisant pour une détection automatique, ou lorsque les conditions de vol (vol de nuit, pluie, brouillard...) ne permettent pas une telle détection automatique. Si nécessaire, l'opérateur peut corriger le pistage de position en ajustant manuellement une ou plusieurs fois la position du réticule dans l'image courante afin que le réticule reste bien positionné sur le point d'aboutissement dans les images successives traitées. Pour faciliter le pistage automatique de la position du point d'aboutissement, des sources lumineuses infrarouges peuvent être disposées de part et d'autre de la piste d'atterrissage à hauteur du point d'aboutissement.

La phase d'assistance à l'atterrissage P2 peut également comprendre une première étape de détermination de position E4 au cours de laquelle la position de l'aéronef est estimée en fonction de la position du point d'aboutissement estimée dans l'image lors de l'étape de traitement d'image E3. Cette estimation nécessite également des données d'altitude de l'aéronef fournies par l'altimètre et les coordonnées du point d'aboutissement qui peuvent être fournies par la station au sol par l'intermédiaire de la liaison contrôle/commande 11. A l'issue de la première étape de détermination de position E4, le dispositif de traitement dispose d'une position de l'aéronef, par exemple sous forme de longitude et de latitude. Cette position peut être alors employée pour réaliser le guidage de l'aéronef jusqu'à son atterrissage au point d'aboutissement PA lors d'une troisième étape de guidage E6. Comme lors de la phase d'assistance P1, les données de position de l'aéronef obtenues à l'issue de la première étape de détermination de position E4 peuvent être filtrées à l'aide d'un filtre de Kalman lors d'une étape de filtrage E5 afin d'affiner l'estimation de la position de l'aéronef avant d'utiliser cette position pour réaliser le guidage de l'aéronef lors de la troisième étape de guidage E6.

Un exemple non limitatif de mode de mise en oeuvre de la première étape de détermination de position E4 sera donné dans les paragraphes suivants. Alternativement d'autres modes de mise en oeuvre bien connus de l'Homme du Métier pourraient être mis en oeuvre. Comme représenté en figure 5, la première étape de détermination de position E4 peut comprendre une étape de calcul de ligne de visée E41 au cours de laquelle la ligne de visée de l'aéronef au point d'aboutissement PA est déterminée dans le repère terrestre centré.

Cette détermination peut être réalisée à partir de :

- $(PA_L, PA_G, PA_Z)$ la position du point d'aboutissement PA fournie par la station au sol,

- $(PA_H, PA_V)$ les abscisse et ordonnée du point d'aboutissement pointé par le réticule dans l'image de la caméra embarquée obtenues à l'issue de l'étape de traitement d'image E3, par exemple par rapport au coin supérieur gauche de l'image

- $(C\varphi, C\theta, C\psi)$ les angles de positionnement de la caméra embarquée dans un repère attaché à l'aéronef,

- $(C_{AOH}, C_{AOV})$ les angles horizontal et vertical d'ouverture de la caméra,

- $(C_{RH}, C_{RV})$ les résolutions horizontale et verticale de la caméra,

- $(A\varphi, A\theta, A\psi)$ les angles de roulis, tangage et cap de l'aéronef fournis par la centrale inertielle,

- $A_Z$ l'altitude de l'aéronef fournie par l'altimètre.

On note par ailleurs :

- Cazimut et Celevation l'azimut et l'élévation de l'aéronef dans le repère de la caméra

- RT le rayon terrestre

- Vx : vecteur associé à la ligne de visée dans le repère caméra

- Vy : vecteur associé à la 1ère normale à la ligne de visée dans le repère caméra

- Vz : vecteur associé à la 2ème normale à la ligne de visée dans le repère caméra

- Wx : vecteur associé à la ligne de visée dans le repère terrestre centré

- Wy : vecteur associé à la 1ère normale à la ligne de visée dans le repère terrestre centré

- Wz : vecteur associé à la 2ème normale à la ligne de visée dans le repère terrestre centré

L'étape de calcul de ligne de visée E41 peut alors comprendre les opérations suivantes :

- détermination de l'angle élémentaire associé à un pixel

$$A_H = \frac{C_{AOH}}{C_{RH}}$$

$$A_V = \frac{C_{AOV}}{C_{RV}}$$

- détermination de la position angulaire de la ligne de visée par rapport à l'axe de la caméra,

$$C_{azimut} = PA_H \cdot A_H - \frac{C_{AOH}}{2}$$

$$C_{\acute{e}l\acute{e}vation} = PA_V \cdot A_V - \frac{C_{AOV}}{2}$$

- détermination de la ligne de visée dans le repère de la caméra :

Vecteur associé à la ligne de visée vers le point d'aboutissement :

$$V_x = \begin{pmatrix} \cos(C_{azimut})\cos(C_{\acute{e}l\acute{e}vation}) \\ \sin(C_{azimut})\cos(C_{\acute{e}l\acute{e}vation}) \\ \sin(C_{\acute{e}l\acute{e}vation}) \end{pmatrix}$$

Vecteur associé à la première normale à la ligne de visée vers le point d'aboutissement :

$$V_y = \begin{pmatrix} -\sin(C_{azimut}) \\ \cos(C_{azimut}) \\ 0 \end{pmatrix}$$

Vecteur associé à la deuxième normale à la ligne de visée vers le point d'aboutissement :

$$V_z = V_x \wedge V_y$$

- constitution d'une matrice de passage du repère de la caméra au repère de l'aéronef :

$$MP_{C \to A}$$
$$= \begin{pmatrix} \cos(C_\theta)\cos(C_\psi) & \sin(C_\theta)\sin(C_\varphi)\cos(C_\psi) - \sin(C_\psi)\cos(C_\varphi) & \cos(C_\psi)\sin(C_\theta)\cos(C_\varphi) + \sin(C_\varphi)\sin(C_\psi) \\ \cos(C_\theta)\sin(C_\psi) & \sin(C_\theta)\sin(C_\varphi)\sin(C_\psi) + \cos(C_\psi)\cos(C_\varphi) & \sin(C_\theta)\cos(C_\varphi)\sin(C_\psi) - \sin(C_\varphi)\cos(C_\psi) \\ -\sin(C_\theta) & \cos(C_\theta)\sin(C_\varphi) & \cos(C_\theta)\cos(C_\varphi) \end{pmatrix}$$

- constitution d'une matrice de passage du repère de l'aéronef au repère terrestre local du point d'aboutissement :

$$MP_{A \to RTL}$$
$$= \begin{pmatrix} \cos(A_\theta)\cos(A_\psi) & \sin(A_\theta)\sin(A_\varphi)\cos(A_\psi) - \sin(A_\psi)\cos(A_\varphi) & \cos(A_\psi)\sin(A_\theta)\cos(A_\varphi) + \sin(A_\varphi)\sin(A_\psi) \\ \cos(A_\theta)\sin(A_\psi) & \sin(A_\theta)\sin(A_\varphi)\sin(A_\psi) + \cos(A_\psi)\cos(A_\varphi) & \sin(A_\theta)\cos(A_\varphi)\sin(A_\psi) - \sin(A_\varphi)\cos(A_\psi) \\ -\sin(A_\theta) & \cos(A_\theta)\sin(A_\varphi) & \cos(A_\theta)\cos(A_\varphi) \end{pmatrix}$$

- constitution d'une matrice de passage du repère terrestre local du point d'aboutissement au repère terrestre centré :

$$MP_{RTL \to RTC} = \begin{pmatrix} x_t & y_t & -u_t \end{pmatrix}$$

$$u_t = \begin{pmatrix} \cos(PA_L)\cos(PA_G) \\ \cos(PA_L)\sin(PA_G) \\ \sin(PA_L) \end{pmatrix}$$

$$y_t = \frac{\begin{pmatrix} 0 \\ 0 \\ 1 \end{pmatrix} \wedge u_t}{\left\| \begin{pmatrix} 0 \\ 0 \\ 1 \end{pmatrix} \wedge u_t \right\|} = \frac{1}{|\cos(PA_L)|} \begin{pmatrix} -\cos(PA_L)\sin(PA_G) \\ \cos(PA_L)\cos(PA_G) \\ 0 \end{pmatrix}$$

$$x_t = u_t \wedge y_t = \frac{1}{|\cos(PA_L)|} \begin{pmatrix} -\sin(PA_L)\cos(PA_L)\cos(PA_G) \\ -\sin(PA_L)\cos(PA_L)\sin(PA_G) \\ (\cos(PA_L))^2 \end{pmatrix}$$

- calcul de la matrice de passage du repère de la caméra au repère terrestre centré :

$$MP_{C \to RTC} = MP_{RTL \to RTC} \cdot MP_{A \to RTL} \cdot MP_{C \to A}$$

- détermination de la ligne de visée (W$_x$, W$_y$, W$_z$) dans le repère terrestre centré.

    Vecteur associé à la ligne de visée dans le repère terrestre centré :

$$W_x = MP_{C \to RTC} \cdot V_x$$

    Vecteur associé à la 1$^{ère}$ normale à la ligne de visée vers le point d'aboutissement :

$$W_y = MP_{C \to RTC} \cdot V_y$$

Vecteur associé à la 2ème normale à la ligne de visée vers le point d'aboutissement :

$$W_z = MP_{C \to RTC} \cdot V_z$$

La première étape de détermination de position E4 peut ensuite comprendre une étape de calcul de position E42 au cours de laquelle :

- sont déterminées les équations :

  ○ du plan ayant pour normale $u_t$ tangent au point résultant de la projection du point d'aboutissement à l'altitude de l'aéronef,
  ○ du plan engendré par ($W_x$, $W_z$), de normale $W_y$ et passant par ($PA_L$, $PA_G$, $PA_Z$),
  ○ du plan engendré par ($W_x$, $W_y$), de normale $W_z$ et passant par ($PA_L$, $PA_G$, $PA_Z$),

- les coordonnées de l'aéronef sont déterminées dans le repère terrestre centré.

Elles correspondent au point d'intersection de ces trois plans :

La solution X est obtenue en résolvant le système linéaire *MX = A* lorsque $u_t^T W_x < 0$.

Avec :

$$M = \begin{pmatrix} u_t^T \\ W_y^T \\ W_z^T \end{pmatrix}$$

$$A = (R_T + A_Z) \begin{pmatrix} u_t^T u_t \\ u_t^T W_y \\ u_t^T W_z \end{pmatrix}$$

La solution du système linéaire ci-dessus est : $X = \begin{pmatrix} x_1 \\ x_2 \\ x_3 \end{pmatrix} = M^{-1} A$

La latitude et la longitude sont alors données par :

$$L = \sin^{-1}\left(\frac{x_3}{\|X\|}\right)$$

$$G = \arg(x_1 + ix_2)$$

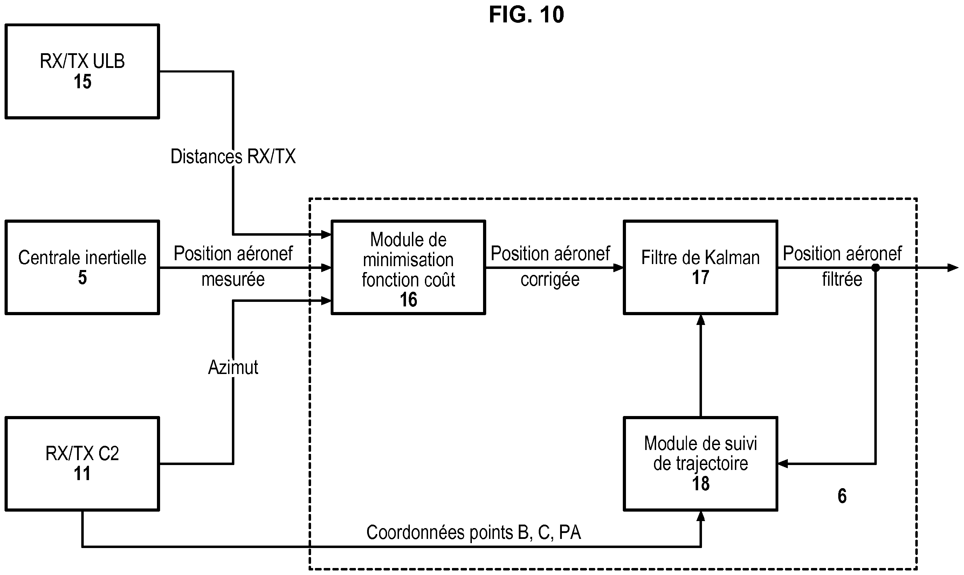

Dans un troisième mode de réalisation, représenté en figure 5 et en **figure 10,** la phase d'assistance à l'atterrissage P2, au cours de laquelle l'aéronef est guidé du point d'accroche C au point d'aboutissement PA, peut exploiter des données de distance entre un émetteur-récepteur embarqué sur l'aéronef et au moins trois émetteurs-récepteurs au sol. Pour cela, la phase d'assistance à l'atterrissage P2 peut comprendre une deuxième étape de détermination de position E7 au cours de laquelle des données de position corrigées de l'aéronef sont estimées à partir de données de position fournies par la centrale inertielle, de mesures d'azimut transmises par l'écartomètre, de données de distances entre l'émetteur-récepteur embarqué et lesdits au moins trois émetteurs-récepteurs au sol. Comme expliqué ci-dessus, la distance entre chaque émetteur-récepteur au sol et l'émetteur-récepteur embarqué peut être déterminée par l'échange de signaux entre ces émetteurs. Puisque la position des émetteurs-récepteurs au sol est connue, ces informations de distances peuvent être employées pour minimiser l'incertitude sur la position de l'aéronef.

Pour cela, le calcul des données de position corrigées faisant intervenir les mesures transmises par l'écartomètre et les distances entre émetteurs-récepteurs (ER) peut être réalisé par un module de minimisation 16 minimisant une fonction de coût, de façon similaire à la minimisation de fonction coût réalisée lors de la phase d'assistance à la navigation retour P1 et décrite ci-dessus. Un exemple de fonction de coût simple C est fourni ci-dessous. Cette fonction de coût comprend par exemple un terme C1 fonction des données de distance entre l'émetteur-récepteur embarqué et les émetteurs-récepteurs au sol, un terme C2 fonction des données de position déterminées par la centrale inertielle et un terme C3 fonction de la mesure d'azimut fournie par l'écartomètre.

$$C\big(x(t),y(t)\big) = \underbrace{C_1\big(x(t),y(t)\big)}_{ER\ ULB} + \underbrace{C_2\big(x(t),y(t)\big)}_{centrale\ inertielle} + \underbrace{C_3\big(x(t),y(t)\big)}_{écartomètre}$$

La détermination de la position de l'aéronef étant réalisée de manière discrète, on suppose dans cet exemple qu'elle est réalisée de manière périodique avec une période T d'échantillonnage. On se place à l'instant t = kT.

$$C_1\big(x(kT),y(kT)\big) = \sum_{m=0}^{k}\sum_{n=1}^{N} w_n(mT)\left(\frac{\sqrt{(x(mT)-x_n)^2 + (y(mT)-y_n)^2} - \sqrt{d_n^2(mT) - A_Z^2(mT)}}{\delta_{maxi}^{ULB}(mT)}\right)^o$$

$$C_2\big(x(kT),y(kT)\big) = \sum_{m=0}^{k}\left(\frac{\sqrt{\big(x(mT)-x_I(mT)\big)^2 + \big(y(mT)-y_I(mT)\big)^2}}{\delta_{maxi}^{CI}(mT)}\right)^p$$

$$C_3\big(x(kT),y(kT)\big) = \sum_{m=0}^{k}\left(\frac{\big(\theta(mT)-\theta_e(mT)\big)^2}{\sigma_e^2}\right)^q$$

Où :

$(x(mT),y(mT))$ : Position retenue de l'aéronef à l'instant mT

$(x_n,y_n)$ : Position de l'Emetteur/Récepteur (ER ULB) au sol d'indice n

$A_Z(mT)$ : Altitude de l'aéronef mesurée par l'altimètre à l'instant t = mT

N : Nombre d'ER ULB déployés au sol (N $\geq$ 3)

$d_n(\tau)$ : Mesure de distance entre l'aéronef et l'ER ULB au sol d'indice n à l'instant $\tau$

$\delta_{maxi}^{ULB}(\tau)$  : Erreur de distance maximale commise lors du processus de mesure de distance

$w_n(\tau)$ : 1 si la mesure de distance est possible (l'ER au sol est à portée de l'ER embarqué), 0 sinon.

$(x_I(mT),y_I(mT))$ : Position donnée par la centrale inertielle à l'instant mT.

$\delta_{maxi}^{CI}(mT)$  : Dérive maximale de la centrale inertielle à l'instant mT.

o, p, q : Paramètres optionnels permettant de conformer progressivement la fonction coût à un « puits rectangulaire » (lorsque o, p, q $\rightarrow \infty$).

$\theta(mT)$ : Azimut retenu de l'aéronef par rapport à la direction de référence à l'instant mT.

$\theta_e(mT)$ : Azimut mesuré de l'aéronef par rapport à la direction de référence à l'instant mT.

$\sigma_e$ : Écart type de l'erreur de mesure commise par l'écartomètre

L'angle $\theta(t)$ est lié aux coordonnées $(x(t),y(t))$ de la manière suivante :

$$\theta(t) = \text{Re}\big(-i\log\big(x(t) + iy(t)\big)\big)$$

Où Re désigne la partie réelle.

Les termes C1, C2 et C3 donnés en exemple sont respectivement fonctions des données de distance, de position et des mesures d'azimut fournies à plusieurs instants mT avant l'instant kT auquel les données de position corrigées x(t), y(t) sont recherchées. Les mesures de distance dn(mT), les coordonnées de position $(x(mT),y(mT))$, $(x_I(mT),y_I(mT))$ et les mesures d'azimut $\theta(mT)$, $\theta_e(mT)$ ayant déjà été déterminées ou mesurées pour les instants antérieurs à t=kT, ces termes sont supposés connus pour m<k.

Minimiser C(x(t),y(t)) revient alors à minimiser :

$$\Gamma(k) = \sum_{n=1}^{N} w_n(k) \left( \frac{\sqrt{(x(k) - x_n)^2 + (y(k) - y_n)^2} - \sqrt{d_n^2(k) - A_z^2(k)}}{\delta_{maxi}^{ULB}(mT)} \right)^o$$

$$+ \left( \frac{\sqrt{\big(x(k) - x_I(k)\big)^2 + \big(y(k) - y_I(k)\big)^2}}{\delta_{maxi}^{CI}(k)} \right)^p$$

$$+ \left( \frac{\big(\text{Re}\big(-i\log\big(x(k) + iy(k)\big)\big) - \theta_e(k)\big)^2}{\sigma_e^2} \right)^q$$

La solution est obtenue comme présenté ci-dessus en résolvant le système d'équation suivant, par exemple par la méthode de Newton-Raphson :

$$\begin{cases} \dfrac{\partial \Gamma}{\partial x} = f_x = 0 \\ \dfrac{\partial \Gamma}{\partial y} = f_y = 0 \end{cases}$$

Alternativement, l'altitude des émetteurs récepteurs au sol zn peut être prise en compte et la minimisation de la fonction de coût peut être utilisée pour déterminer l'altitude de l'aéronef z(t). La fonction de coût peut alors s'écrire :

$$C\big(x(t), y(t), z(t)\big) = \underbrace{C_1\big(x(t), y(t), z(t)\big)}_{ER\ ULB} + \underbrace{C_2\big(x(t), y(t)\big)}_{centrale\ inertielle} + \underbrace{C_3\big(x(t), y(t)\big)}_{écartomètre}$$

Avec

$$C_1\big(x(kT), y(kT)\big)$$
$$= \sum_{m=0}^{k} \sum_{n=1}^{N} w_n(mT) \left( \frac{\sqrt{(x(mT) - x_n)^2 + (y(mT) - y_n)^2 + (z(mT) - z_n)^2} - d_n(mT)}{\delta_{maxi}^{ULB}(mT)} \right)^o$$

Minimiser C(x(t),y(t), z(t)) revient alors à minimiser :

$$\Gamma(k) = \sum_{n=1}^{N} w_n(k) \left( \frac{\sqrt{(x(k) - x_n)^2 + (y(k) - y_n)^2 + (z(k) - z_n)^2} - d_n(k)}{\delta_{maxi}^{ULB}(k)} \right)^o$$
$$+ \left( \frac{\sqrt{\left(x(k) - x_I(k)\right)^2 + \left(y(k) - y_I(k)\right)^2}}{\delta_{maxi}^{CI}(k)} \right)^p$$
$$+ \left( \frac{\left( \mathrm{Re}\left(-i \log\left(x(k) + iy(k)\right)\right) - \theta_e(k) \right)^2}{\sigma_e^2} \right)^q$$

La solution est obtenue comme présenté ci-dessus en résolvant le système d'équation suivant, par exemple par la méthode de Newton-Raphson :

$$\begin{cases} \dfrac{\partial \Gamma}{\partial x} = f_x = 0 \\[2mm] \dfrac{\partial \Gamma}{\partial y} = f_y = 0 \\[2mm] \dfrac{\partial \Gamma}{\partial z} = f_z = 0 \end{cases}$$

Comme dans la phase d'assistance à la navigation retour P1, les données de position corrigées (x(t), y(t)) obtenues par minimisation de la fonction de coût peuvent être filtrées à l'aide d'un filtre de Kalman 17 afin d'affiner l'estimation de la position de l'aéronef avant d'utiliser cette position pour réaliser le guidage de l'aéronef, et le module de suivi de trajectoire 18 peut adapter la matrice d'état du filtre pour prendre en compte le profil de la trajectoire prédéfinie à faire suivre à l'aéronef.

Le procédé proposé permet ainsi d'obtenir un positionnement de l'aéronef avec une faible incertitude, permettant de guider l'aéronef jusqu'au point d'aboutissement et de le faire atterrir, malgré l'indisponibilité du positionnement par satellite et malgré la dérive de la centrale inertielle de l'aéronef.

**Revendications**

1. Procédé d'assistance automatique à l'atterrissage d'un aéronef (1) sur une piste d'atterrissage depuis un point de retour (A) jusqu'à un point d'aboutissement (PA) au niveau duquel l'aéronef entre en contact avec la piste d'atterrissage,
   ledit procédé étant mis en œuvre par un dispositif de traitement de données (2) configuré pour être embarqué sur ledit aéronef (1) et configuré pour être relié à :

   - une centrale inertielle (5) configurée pour estimer la position et l'attitude de l'aéronef,
   - un altimètre (4) configuré pour mesurer l'altitude de l'aéronef,
   - une station au sol via une liaison (11) contrôle/commande (C2) radioélectrique et bidirectionnelle dans une bande du spectre électromagnétique comprise entre 3 et 6 GHz et une liaison (12) de données mission (M) radioélectrique et bidirectionnelle dans une bande comprise entre 10 et 15 GHz du spectre électromagnétique et une antenne directionnelle configurée pour être orientée vers l'aéronef, la station au sol étant localisé à proximité de la piste d'atterrissage,
   - un écartomètre (13) configuré pour mesurer par rapport à un point de référence l'azimut de l'aéronef par rapport à une direction de référence, à partir de l'orientation de l'antenne directionnelle,

   ledit procédé comprenant

   - une phase d'assistance à la navigation retour (P1) comprenant le guidage (E1, E2), à partir de données de position et d'attitude fournies par la centrale inertielle (5) et de données d'altitude fournies par l'altimètre (4), de l'aéronef le long d'une trajectoire prédéfinie du point de retour (A) jusqu'à un point d'accroche (C) prédéterminé approximativement aligné avec l'axe de la piste d'atterrissage, le guidage étant réalisé sur au moins une partie de ladite trajectoire prédéfinie à partir de données de position corrigées calculées à l'aide de données de position de l'aéronef fournies par la centrale inertielle (5) et de mesures transmises par l'écartomètre (13), ladite phase d'assistance à la navigation retour (P1) comprenant :

- une première étape de guidage (E1) de l'aéronef le long de la trajectoire prédéfinie du point de retour (A) jusqu'à un point de capture (B) prédéterminé, à partir de données de position et d'attitude fournies par la centrale inertielle (5) et de données d'altitude fournies par l'altimètre (4),
- une deuxième étape de guidage (E2) de l'aéronef le long de la trajectoire prédéfinie du point de capture (B) au point d'accroche (C) à partir de données d'attitude fournies par la centrale inertielle, de données d'altitude fournies par l'altimètre (4) et de données de position corrigées calculées à l'aide de données de position de l'aéronef fournies par la centrale inertielle (5) et de mesures d'azimut transmises par l'écartomètre (13), ladite trajectoire prédéfinie imposant à l'aéronef (1) entre le point de capture (B) et le point d'accroche (C) un mouvement tournant de sorte que le balayage angulaire de l'aéronef (1) le long de la trajectoire entre le point de capture (B) et le point d'accroche (C) par rapport à la station au sol soit supérieur à 90°,

- une phase d'assistance à l'atterrissage (P2) comprenant un guidage de l'aéronef du point d'accroche (C) au point d'aboutissement (PA) (E6).

2. Procédé d'assistance selon la revendication 1 dans lequel la première étape de guidage (E1) de la phase d'assistance à la navigation retour (P1) comprend le guidage de l'aéronef le long de la trajectoire prédéfinie du point de retour (A) jusqu'au point de capture (B) à partir de données d'attitude fournies par la centrale inertielle, de données d'altitude fournies par l'altimètre (4) et de données de position corrigées calculées à l'aide des données de position de l'aéronef fournies par la centrale inertielle (5) et de mesures d'azimut transmises par l'écartomètre (13).

3. Procédé d'assistance selon l'une des revendications 1 ou 2 dans lequel la trajectoire prédéfinie entre le point de retour (A) et le point de capture (B) est rectiligne.

4. Procédé d'assistance selon la revendication 2 dans lequel la trajectoire prédéfinie entre le point de retour (A) et le point de capture (B) est en zigzag.

5. Procédé d'assistance selon l'une quelconque des revendications 1 à 4, dans lequel, le dispositif de traitement de données (2) étant configuré pour être relié en outre à une caméra (14) embarquée dans l'aéronef (1), la phase d'assistance à l'atterrissage (P2) comprend l'estimation (E3) d'une position du point d'aboutissement (PA) dans une image de la piste d'atterrissage capturée par la caméra (14) et l'estimation (E4) d'une position de l'aéronef en fonction de ladite position du point d'aboutissement (PA) estimée dans l'image et de données d'altitude fournies par l'altimètre (4).

6. Procédé d'assistance selon l'une quelconque des revendications 1 à 5, dans lequel, le dispositif de traitement de données (2) étant en outre configuré pour être relié à un émetteur-récepteur (15) embarqué sur ledit aéronef et destiné à recevoir des signaux émis par au moins trois émetteurs-récepteurs positionnés au sol, la phase d'assistance à l'atterrissage (P2) comprend l'estimation (E7) de données de position corrigées de l'aéronef à partir de données de position fournies par la centrale inertielle (5), de mesures d'azimut transmises par l'écartomètre (13), de données de distances entre l'émetteur-récepteur embarqué (15) et lesdits au moins trois émetteurs-récepteurs au sol.

7. Produit programme d'ordinateur comprenant des instructions de code pour l'exécution d'un procédé selon l'une quelconque des revendications 1 à 6 lorsque ce programme est exécuté par un processeur.

8. Système d'assistance automatique à l'atterrissage (3) d'un aéronef (1) sur une piste d'atterrissage comprenant :

- une centrale inertielle (5) configurée pour estimer la position et l'attitude de l'aéronef,
- un altimètre (4) configuré pour mesurer l'altitude de l'aéronef,
- une station au sol via une liaison (11) contrôle/commande (C2) radioélectrique et bidirectionnelle dans une bande du spectre électromagnétique comprise entre 3 et 6 GHz et une liaison (12) de données mission (M) radioélectrique et bidirectionnelle dans une bande comprise entre 10 et 15 GHz du spectre électromagnétique et une antenne directionnelle configurée pour être orientée vers l'aéronef, la station au sol étant localisé à proximité de la piste d'atterrissage,
- un écartomètre (13) configuré pour mesurer par rapport à un point de référence l'azimut de l'aéronef par rapport à une direction de référence à partir de l'orientation de l'antenne directionnelle,
- un dispositif de traitement de données (2) configuré pour la mise en œuvre du procédé d'assistance selon l'une des revendications 1 à 6.

9. Système d'assistance (3) selon la revendication 8 comprenant en outre une caméra (14) configurée pour être relié au dispositif de traitement de données (2).

10. Système d'assistance (3) selon la revendication 8 comprenant en outre :

- au moins trois émetteurs-récepteurs positionnés au sol ;
- un émetteur-récepteur (15) destiné à recevoir des signaux émis par lesdits au moins trois émetteurs-récepteurs positionnés au sol, embarqué sur ledit aéronef et configuré pour être relié au dispositif de traitement de données (2).

**Patentansprüche**

1. Automatisches Hilfsverfahren zur Landung eines Luftfahrzeugs (1) auf einer Landebahn von einem Wendepunkt (A) bis zu einem Endpunkt (PA), in dessen Bereich das Luftfahrzeug in Kontakt mit der Landebahn tritt, wobei das Verfahren durch eine Datenverarbeitungsvorrichtung (2) umgesetzt wird, die konfiguriert ist, um in dem Luftfahrzeug (1) verladen zu sein, und konfiguriert, um angeschlossen zu werden an:

- eine Trägheitszentrale (5), die konfiguriert ist, um die Position und die Lage des Luftfahrzeugs zu schätzen,
- einen Höhenmesser (4), der konfiguriert ist, um die Höhe des Luftfahrzeugs zu messen,
- eine Bodenstation über einen hochfrequenten und bidirektionalen Anschluss (11) zur Kontrolle/Steuerung (C2) in einem Band des elektromagnetischen Spektrums zwischen 3 und 6 GHz, und einen hochfrequenten und bidirektionalen Anschluss (12) für Missionsdaten (M) in einem Band zwischen 10 und 15 GHz des elektromagnetischen Spektrums und eine Richtantenne, die konfiguriert ist, um zum Luftfahrzeug ausgerichtet zu werden, wobei die Bodenstation in der Nähe der Landebahn lokalisiert ist,
- einen Abstandsmesser (13), der konfiguriert ist, um in Bezug auf einen Referenzpunkt das Azimut des Luftfahrzeugs in Bezug auf eine Referenzrichtung ausgehend von der Ausrichtung der Richtantenne zu messen,

wobei das Verfahren umfasst

- eine Hilfsphase bei der Wendenavigation (P1), die Leitung (E1, E2), aus von der Trägheitszentrale (5) bereitgestellten Positions- und Lagedaten, und von dem Höhenmesser (4) bereitgestellten Höhendaten des Luftfahrzeugs entlang einer vordefinierten Flugbahn von dem Wendepunkt (A) bis zu einem vorbestimmten Fangpunkt (C) umfassend, der annähernd mit der Achse der Landebahn ausgerichtet ist, wobei die Leitung auf mindestens einem Teil der vordefinierten Flugbahn aus korrigierten Positionsdaten realisiert wird, die mithilfe von Positionsdaten des Luftfahrzeugs, die von der Trägheitszentrale (5) bereitgestellt werden, und durch den Abstandsmesser (13) übertragenen Messungen errechnet werden, wobei die Hilfsphase bei der Umkehrnavigation (P1) umfasst:
- einen ersten Leitschritt (E1) des Luftfahrzeugs entlang der vordefinierten Flugbahn vom Wendepunkt (A) bis zu einem vorbestimmten Aufnahmepunkt (B) aus von der Trägheitszentrale (5) bereitgestellten Positions- und Lagedaten und von dem Höhenmesser (4) bereitgestellten Höhendaten,
- einen zweiten Leitschritt (E2) des Luftfahrzeugs entlang der vordefinierten Flugbahn vom Aufnahmepunkt (B) zum Fangpunkt (C) aus von der Trägheitszentrale bereitgestellten Positions- und Lagedaten, von dem Höhenmesser (4) bereitgestellten Höhendaten und korrigierten Positionsdaten, die mithilfe von Positionsdaten des Luftfahrzeugs, die von der Trägheitszentrale (5) bereitgestellt werden, und von dem Abstandsmesser (13) übertragenen Azimut-Daten berechnet werden, wobei die vordefinierte Flugbahn dem Luftfahrzeug (1) zwischen dem Aufnahmepunkt (B) und dem Fangpunkt (C) eine Drehbewegung vorschreibt, sodass die Winkelabtastung des Luftfahrzeugs (1) entlang der Flugbahn zwischen dem Aufnahmepunkt (B) und dem Fangpunkt (C) in Bezug auf die Bodenstation größer als 90° ist,
- eine Hilfsphase bei der Landung (P2) eine Leitung des Luftfahrzeugs vom Fangpunkt (C) zum Endpunkt (PA) (E6) umfasst.

2. Hilfsverfahren nach Anspruch 1, wobei der erste Leitschritt (E1) der Hilfsphase bei der Wendenavigation (P1) eine Leitung des Luftfahrzeugs entlang der vordefinierten Flugbahn vom Wendepunkt (A) bis zum Aufnahmepunkt (B) aus von der Trägheitszentrale bereitgestellten Lagedaten, aus von dem Höhenmesser (4) bereitgestellten Höhendaten und korrigierten Positionsdaten, die mithilfe der Positionsdaten des Luftfahrzeugs, die von der Trägheitszentale (5) bereitgestellt werden, und von dem Abstandsmesser (13) übertragenen Azimut-Daten berechnet werden, umfasst.

3. Hilfsverfahren nach einem der Ansprüche 1 oder 2, wobei die vordefinierte Flugbahn zwischen dem Wendepunkt (A) und dem Aufnahmepunkt (B) geradlinig ist.

4. Hilfsverfahren nach Anspruch 2, wobei die vordefinierte Flugbahn zwischen dem Wendepunkt (A) und dem Aufnahmepunkt (B) Zickzack verläuft.

5. Hilfsverfahren nach einem der Ansprüche 1 bis 4, wobei, da die Datenverarbeitungsvorrichtung (2) konfiguriert ist, um weiter an eine Kamera (14) angeschlossen zu werden, die in dem Luftfahrzeug (1) verladen ist, die Hilfsphase bei der Landung (P2) die Schätzung (E3) einer Position des Endpunktes (PA) auf einem Bild der Landebahn, das von der Kamera (14) aufgenommen wird, und die Schätzung (E4) einer Position des Luftfahrzeugs in Abhängigkeit von der Position des geschätzten Endpunktes (PA) auf dem Bild und von dem Höhenmesser (4) bereitgestellten Höhendaten umfasst.

6. Hilfsverfahren nach einem der Ansprüche 1 bis 5, wobei, da die Datenverarbeitungsvorrichtung (2) weiter konfiguriert ist, um an einen Sender-Empfänger (15) angeschlossen zu werden, der in dem Luftfahrzeug verladen ist, und dazu bestimmt ist, Signale zu empfangen, die durch mindestens drei am Boden positionierte Sender-Empfänger ausgegeben werden, die Hilfsphase bei der Landung (P2) die Schätzung (E7) von korrigierten Positionsdaten des Luftfahrzeugs aus von der Trägheitszentrale (5) bereitgestellten Positionsdaten, von dem Abstandsmesser (13) übertragenen Azimut-Daten, Abstandsdaten zwischen dem verladenen Sender-Empfänger (15) und den mindestens drei Sendern-Empfängern am Boden umfasst.

7. Computerprogrammprodukt, Codeanweisungen zur Ausführung eines Verfahrens nach einem der Ansprüche 1 bis 6 umfassend, wenn es durch einen Prozessor ausgeführt wird.

8. Automatisches Hilfssystem zur Landung (3) eines Luftfahrzeugs (1) auf einer Landebahn, umfassend:

    - eine Trägheitszentrale (5), die konfiguriert ist, um die Position und die Lage des Luftfahrzeugs zu schätzen,
    - einen Höhenmesser (4), der konfiguriert ist, um die Höhe des Luftfahrzeugs zu messen,
    - eine Bodenstation über einen hochfrequenten und bidirektionalen Anschluss (11) zur Kontrolle/Steuerung (C2) in einem Band des elektromagnetischen Spektrums zwischen 3 und 6 GHz, und einen hochfrequenten und bidirektionalen Anschluss (12) für Missionsdaten (M) in einem Band zwischen 10 und 15 GHz des elektromagnetischen Spektrums und eine Richtantenne, die konfiguriert ist, um zum Luftfahrzeug ausgerichtet zu werden, wobei die Bodenstation in der Nähe der Landebahn lokalisiert ist,
    - einen Abstandsmesser (13), der konfiguriert ist, um in Bezug auf einen Referenzpunkt das Azimut des Luftfahrzeugs in Bezug auf eine Referenzrichtung ausgehend von der Ausrichtung der Richtantenne zu messen,
    - eine Datenverarbeitungsvorrichtung (2), die für die Umsetzung des Hilfsverfahrens nach einem der Ansprüche 1 bis 6 konfiguriert ist.

9. Hilfssystem (3) nach Anspruch 8, weiter eine Kamera (14) umfassend, die konfiguriert ist, um an die Datenverarbeitungsvorrichtung (2) angeschlossen zu werden.

10. Hilfssystem (3) nach Anspruch 8, weiter umfassend:

    - mindestens drei am Boden positionierte Sender-Empfänger;
    - einen Sender-Empfänger (15), der dazu bestimmt ist, Signale zu empfangen, die von den mindestens drei am Boden positionierten Sender-Empfängern zu empfangen, der in dem Luftfahrzeug verladen und konfiguriert ist, um an die Datenverarbeitungsvorrichtung (2) angeschlossen zu werden.

**Claims**

1. An automatic assistance method for landing of an aircraft (1) on a landing airway from a return point (A) to a culmination point (PA) at which the aircraft comes into contact with the landing runway,

said method being implemented by a data processing device (2) configured to be on board said aircraft (1) and configured to be connected to:

- an inertial unit (5) configured to estimate the position and the attitude of the aircraft,
- an altimeter (4) configured to measure the altitude of the aircraft,
- a ground-based station via a command/control (C2) link (11) by radio and bidirectional within a band of the electromagnetic spectrum comprised between 3 and 6 GHz and a mission data (M) link (12) by radio and bidirectional within a band comprised between 10 and 15 GHz of the electromagnetic spectrum and a directional antenna configured to be oriented toward the aircraft, the ground-based station being located in proximity to the landing runway,
- a distance ruler (13) configured to measure, with respect to a reference point, the azimuth of the aircraft with respect to a reference direction, based on the orientation of the directional antenna,

said method comprising:

- a return navigation assistance phase (P1) comprising guidance (E1, E2), based on position and attitude data provided by the inertial unit (5) and altitude data provided by the altimeter (4) of the aircraft along a predefined trajectory from the return point (A) to a predetermined connection point (C) approximately aligned with the axis of the landing runway, guidance being achieved over at least a portion of said predefined trajectory based on corrected position data calculated using position data of the aircraft provided by the inertial unit (5) and measurements transmitted by the distance ruler (13), said return navigation assistance phase (P1) comprising:

- a first step of guiding (E1) the aircraft along the predefined trajectory from the return point (A) to a predetermined capture point (B), based on position and attitude data provided by the inertial unit (5) and altitude data provided by the altimeter (4),
- a second step of guiding (E2) the aircraft along the predefined trajectory from the capture point (B) to the connection point (C) based on attitude data provided by the inertial unit, altitude data provided by the altimeter (4) and corrected position data calculated using the aircraft position data provided by the inertial unit (5) and azimuth measurements transmitted by the distance ruler (13), said predefined trajectory imposing a turning movement on the aircraft (1) between the capture point (B) and the connection point (C) so that the angular sweep of the aircraft (1) along the trajectory between the capture point (B) and the connection point (C) with respect to the ground-based station is greater than 90°,

- a landing assistance phase (P2) comprising a guidance of the aircraft from the connection point (C) to the culmination point (PA) (E6).

2. The assistance method according to claim 1, wherein the first step of guiding (E1) the return navigation assistance phase (P1) comprises the guidance of the aircraft along the predefined trajectory from the return point (A) to the capture point (B) based on attitude data provided by the inertial unit, altitude data provided by the altimeter (4) and corrected position data calculated using the aircraft position data provided by the inertial unit (5) and azimuth measurements transmitted by the distance ruler (13).

3. The assistance method according to one of claims 1 or 2 wherein the predefined trajectory between the return point (A) and the capture point (B) is rectilinear.

4. The assistance method according to claim 2 wherein the predefined trajectory between the return point (A) and the capture point (B) is a zigzag.

5. The assistance method according to any one of claims 1 to 4, wherein, the data processing device (2) being configured to also be connected to a camera (14) on board the aircraft (1), the landing assistance phase (P2) comprises the estimation (E3) of a position of the culmination point (PA) in an image of the landing runway captured by the camera (14) and the estimation (E4) of a position of the aircraft depending on said position of the culmination point (PA) estimated in the image and altitude data provided by the altimeter (4).

6. The assistance method according to any one of claims 1 to 5, wherein, the data processing device (2) further being configured to be connected to a transceiver (15) on board said aircraft and designed to receive signals emitted by at least three transceivers positioned on the ground, the landing assistance phase (P2) comprises the estimation (E7) of corrected position data of the aircraft based on position data provided by the inertial unit (5), azimuth meas-

**EP 3 271 789 B1**

urements transmitted by the distance ruler (13), distance data between the on-board transceiver (15) and said at least three ground-based transceivers.

**7.** A computer program product comprising code instructions for the execution of a method according to any one of claims 1 to 6 when this program is executed by a processor.

**8.** A system for automatic assistance with landing (3) of an aircraft (1) on a landing runway comprising:

- an inertial unit (5) configured to estimate the position and the attitude of the aircraft,
- an altimeter (4) configured to measure the altitude of the aircraft,
- a ground-based station via a command/control (C2) link (11) by radio and bidirectional within a band of the electromagnetic spectrum comprised between 3 and 6 GHz and a mission data (M) link (12) by radio and bidirectional within a band comprised between 10 and 15 GHz of the electromagnetic spectrum and a directional antenna configured to be oriented toward the aircraft, the ground-based station being located in proximity to the landing runway,
- a distance ruler (13) configured to measure with respect to a reference point the azimuth of the aircraft with respect to a reference direction based on the orientation of the directional antenna,
- a data processing device (2) configured to implement the assistance method according to one of clams 1 to 6.

**9.** The assistance system (3) according to claim 8 further comprising a camera (14) configured to be connected to the data processing device (2).

**10.** The assistance system (3) according to claim 8 further comprising:

- at least three transceivers positioned on the ground;
- a transceiver (15) designed to receive signals emitted by said at least three transceivers positioned on the ground, on board said aircraft and configured to be connected to the data processing device (2).

**20**

**FIG. 1**

A

B

Trajectoire en U

C  PA

Trajectoire en O

FIG. 2

**Aéronef 1**

**Système d'assistance à l'atterrissage 3**

RX/TX C2 **11**     Caméra **14**

Azimut,
coordonnées B, C

**Dispositif de traitement de données 2**

Système de navigation
autonome **6**     Latitude, longitude
estimées     Système de contrôle
de vol **7**

Gouvernes **8**

Gaz **9**

Latitude, longitude,
cap, roulis, tangage

Centrale inertielle **5**     Cap, roulis, tangage

Altitude     Altimètre **4**     Altitude

EP 3 271 789 B1

**FIG. 3**

Lien Mission M **12**

1

Lien Contrôle/Commande C2 **11**

Ecartomètre
**13**

EP 3 271 789 B1

FIG. 4

# FIG. 5

Phase d'assistance à la navigation retour

E1 — Guidage A - > B

E2 — Guidage B - > C

P1

Phase d'assistance à l'atterrissage

E3 — Traitement d'image - Estimation position PA dans image

Estimation position corrigée de l'aéronef — E7

Estimation position de l'aéronef

E4 — Calcul de ligne de visée — E41

Calcul de position — E42

P2

Filtrage — E5

Guidage C - > PA — E6

FIG. 6

```
Centrale inertielle        Position aéronef      Module de          Position aéronef     Filtre de Kalman      Position aéronef
        5                      mesurée          minimisation            corrigée                 17                 filtrée
                                              fonction coût
                                                    16
```

Azimut

```
RX/TX C2
   11
```

Module de suivi
de trajectoire
18

6

Coordonnées points B, C, PA

EP 3 271 789 B1

FIG. 7

INCERTITUDE DE POSITION A L'ISSUE DE LA MANOEUVRE CIRCULAIRE

Densité de probabilité (approchée)

Ecart de distance par rapport au point visé de la zone d'accroche (m)

R = 2 km
R = 3 km
R = 4 km
R = 5 km
R = 6 km

**FIG. 8**

Caméra
**14**

↓

Traitement d'image -
estimation position
PA dans image
**E3**

Positionnement réticule
par l'opérateur

RX/TX C2
**11**

Coordonnées PA

Position PA dans image

↓

Altimètre
**4**

Altitude

↓

Estimation position
de l'aéronef
**E4**

Position aéronef estimée (grossière)

↓

Filtre de Kalman
**E5**

Position aéronef filtrée (fine)

→

28

FIG. 9

**FIG. 10**

RX/TX ULB
**15**

Distances RX/TX

Centrale inertielle
**5**

Position aéronef
mesurée

Module de
minimisation
fonction coût
**16**

Position aéronef
corrigée

Filtre de Kalman
**17**

Position aéronef
filtrée

Azimut

RX/TX C2
**11**

Module de suivi
de trajectoire
**18**

**6**

Coordonnées points B, C, PA

EP 3 271 789 B1

30

## RÉFÉRENCES CITÉES DANS LA DESCRIPTION

**Documents brevets cités dans la description**

- FR 2894347 A1